# FASCICULE DE BREVET EUROPEEN

(11) **EP 1 818 846 B1**
(45) Date de publication et mention de la délivrance du brevet: **07.10.2009**
(21) Numéro de dépôt: 07102074.7
(22) Date de dépôt: 09.02.2007
(51) Int. Cl.: G06F 21/00

(54) **Vérification d'intégrité de programmes ou de séquencement d'une machine d'états**
Verifizierung der Integrität von Programmen oder der Sequenzierung einer Zustandsmaschine
Verification of the integrity of programs or of sequencing in a state machine

(30) Priorité: 10.02.2006 FR 0650488
(43) Date de publication de la demande: 15.08.2007
(73) Titulaire: ST MICROELECTRONICS S.A., 92120 Montrouge (FR)
(72) Inventeur: Wuidart, Sylvie, 83910 Pourrieres (FR)
(74) Mandataire: de Beaumont, Michel

(56) Documents cités:
- WO-A-01/03084
- US-A1- 2003 061 499
- US-A1- 2003 204 696

## Description

### Domaine de l'invention

La présente invention concerne de façon générale les circuits électroniques et, plus particulièrement, la vérification d'intégrité de programmes exécutés par un processeur ou la vérification du séquencement d'une machine d'états en logique câblée.

La présente invention s'applique par exemple à des circuits de traitement de type microcontrôleur susceptibles de manipuler des quantités numériques censées rester secrètes. Il peut s'agir, par exemple, de calculs de chiffrement.

### Exposé de l'art antérieur

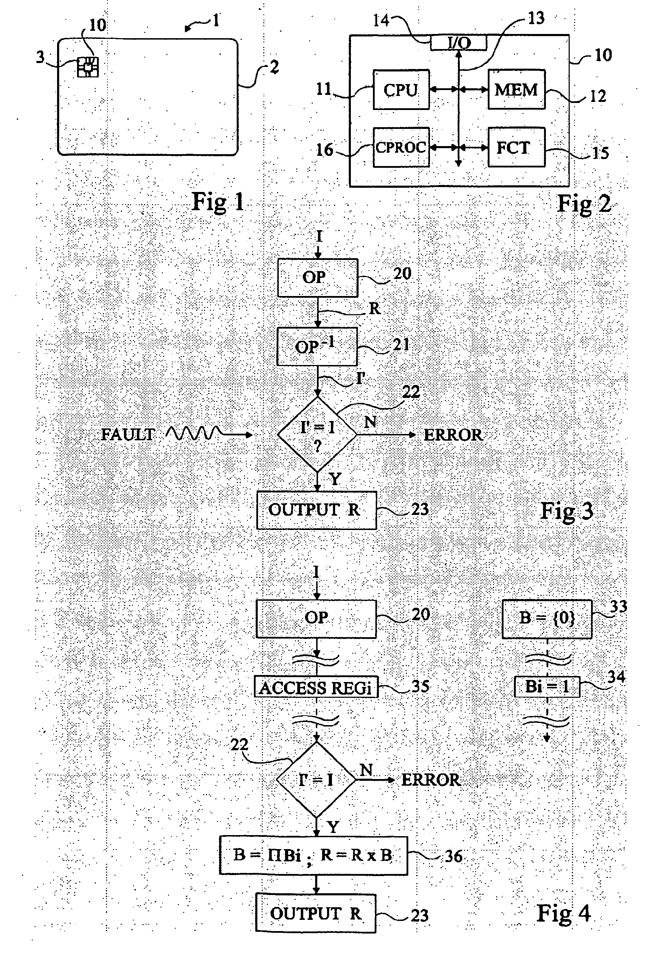

La figure 1 représente, de façon très schématique, une carte à puce 1 du type auquel s'applique à titre d'exemple la présente invention. Une telle carte est par exemple constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission-réception sans contact.

La figure 2 représente, de façon très schématique et sous forme de blocs, un exemple classique de circuit électronique 10 du type auquel s'applique la présente invention. Ce circuit comporte une unité centrale de traitement 11 (CPU) capable d'exécuter des programmes contenus dans une ou plusieurs mémoires. Dans cet exemple, une seule mémoire 12 (MEM) est représentée mais le circuit peut comporter plusieurs mémoires respectivement volatiles et non volatiles, reprogrammables ou non. Un ou plusieurs bus 13 de données, de commandes et d'adresses servent de support de communication entre les différents constituants du circuit 10 et avec une interface 14 (I/O) d'entrée-sortie pour communication avec ou sans contact avec l'extérieur. Le plus souvent, le circuit 10 comporte d'autres fonctions (bloc 15, FCT) dépendant de l'application, voire un coprocesseur 16 (CPROC), par exemple dédié à des calculs cryptographiques.

Lors de l'exécution de programmes manipulant des quantités secrètes, l'introduction d'une perturbation dans le fonctionnement du processeur (par exemple, en perturbant l'alimentation du circuit) peut permettre de retrouver les quantités numériques manipulées en analysant les résultats produits. De telles attaques sont généralement appelées attaques par injection de fautes.

Une solution connue pour protéger les calculs contre de telles attaques consiste à conditionner la fourniture du résultat en sortie du circuit électronique à un test sur le résultat calculé, pour vérifier que l'exécution du calcul n'a pas été perturbée.

La figure 3 représente, de façon simplifiée, un exemple d'organigramme classique d'exécution d'un calcul OP cryptographique protégé contre les injections de fautes. Une quantité numérique I à traiter est soumise au calcul OP. Puis, le résultat R obtenu est soumis au calcul inverse (bloc 21, OP⁻¹). La quantité I' obtenue en sortie du bloc 21 est alors comparée à la donnée d'entrée I (bloc 22, I'=I?). Si les deux quantités sont identiques (sortie Y du bloc 22), cela signifie que le calcul n'a pas été perturbé et le circuit électronique fournit alors le résultat en sortie (bloc 23, OUTPUT R). Dans le cas contraire (sortie N du bloc 22), le circuit électronique applique une procédure de traitement d'erreur (ERROR) pour protéger son contenu. Par exemple, dans le cas d'une carte à puce, cela consiste à rendre la carte à puce muette..

Un problème qui subsiste dans un mécanisme de vérification d'intégrité du type de celui illustré par la figure 3 est que, si une faute (FAULT) est introduite au moment du test 22, celui-ci n'est pas exécuté et le résultat R peut quand même être fourni.

Une solution connue pour contrer ce genre d'attaques est de calculer une signature du code opératoire exécuté afin de vérifier cette signature par rapport à une signature préenregistrée avant de fournir le résultat.

Un inconvénient est que, pour que la signature soit prédictible, le code programme exécuté doit être déterministe (on doit pouvoir déterminer à l'avance les codes exécutés et leur ordre pour calculer la signature de référence). En particulier, cela interdit l'ajout d'étapes aléatoires dans le calcul de façon à le désynchroniser, sauf à accepter une tolérance sur la signature calculée, ce qui nuit alors à la sécurité. Or, les programmes déterministes sont plus vulnérables à une autre catégorie d'attaques à savoir les attaques par analyse de la consommation du circuit lors de l'exécution des calculs.

Un autre inconvénient est que cela complique la mise à jour des programmes contenus dans le circuit, dans la mesure où ces mises à jour devraient en principe respecter la signature d'origine, ce qui est en pratique quasi impossible.

Des problèmes similaires se posent pour des machines d'états en logique câblée (par exemple, des cellules d'exécution d'algorithmes de chiffrement ou la machine d'états du coeur d'un microprocesseur) qui sont également sensibles à des attaques par injection de fautes que ces machines d'états soient reprogrammables (FPGA) ou non.

Le document WO-A-01/03084 décrit un procédé de sécurisation du traitement d'une information sensible dans un module de sécurité de structure monolithique et prévoit la mise à jour d'indicateurs pour masquer le passage à certaines étapes du programme qui mènent à une opération sur des données sensibles.

Le document US-A-2003/204696 décrit un procédé et un système contre des injections de fautes dans l'exécution d'un programme en vérifiant l'identité entre deux lectures successives d'une même zone de données.

Le document US-A-2003/061499 décrit un procédé de chiffrement et de déchiffrement dans lequel des bits de chiffrement sont activés en fonction du résultat du chiffrement.

### Résumé de l'invention

La présente invention vise à pallier tout ou partie des inconvénients des solutions connues de détection et/ou de vérification d'intégrité de programmes exécutés par un circuit électronique.

L'invention vise plus particulièrement à permettre une vérification d'intégrité d'un code exécuté, indépendamment du séquencement de ce code et, notamment, de l'ordre des étapes.

L'invention vise également à proposer une solution compatible avec une exécution désynchronisée d'un programme.

L'invention vise également une solution applicable aux machines d'états.

Pour atteindre tout ou partie de ces objets ainsi que d'autres, la présente invention prévoit un procédé de protection de l'exécution d'un calcul par un circuit électronique, conditionnant un résultat du calcul à des états de bits de vérification respectivement affectés à des éléments de mémorisation et mis à dans un état actif quand l'élément de mémorisation correspondant est accédé pendant l'exécution du calcul, indépendamment du contenu de cet élément de mémorisation.

Selon un mode de mise en oeuvre de la présente invention, le résultat à fournir est multiplié par le produit des bits de vérification avant fourniture par le circuit, lesdits bits de vérification ayant un état actif à 1.

Selon un mode de mise en oeuvre de la présente invention, chaque bit du résultat à fournir est combiné par une combinaison de type OU avec un bit de contrôle, ledit bit de contrôle étant obtenu par une combinaison de type OU de tous les bits de vérification et lesdits bits de vérification ayant un état actif à 0.

Selon un mode de mise en oeuvre de la présente invention, chaque élément de mémorisation temporaire du circuit électronique comporte un desdits bits de vérification.

Selon un mode de mise en oeuvre de la présente invention, les bits de vérification sont fonction des éléments de mémorisation du circuit qui doivent être utilisés par le calcul.

Selon un mode de mise en oeuvre de la présente invention, lesdits bits de vérification sont initialisés avant chaque exécution du calcul.

L'invention prévoit également un circuit électronique comportant une unité de traitement pour exécuter au moins un calcul, et au moins un ensemble d'éléments de mémorisation temporaire, un bit de vérification étant affecté à chaque élément, ce bit étant susceptible d'être mis dans un état actif lors d'un accès en lecture et/ou en écriture de l'élément concerné.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente un exemple d'application de la présente invention ;
la figure 2 décrite précédemment représente, de façon très schématique et sous forme de blocs, un exemple de circuit électronique du type auquel s'applique la présente invention ;
la figure 3 est un organigramme simplifié classique d'exécution d'un code opératoire pour illustrer l'état de la technique et le problème posé ;
la figure 4 représente un organigramme partiel et simplifié mettant en oeuvre la présente invention ;
la figure 5 représente, de façon schématique et sous forme de blocs, un mode de réalisation d'un mot de contrôle selon la présente invention ; et
la figure 6 représente, de façon schématique et fonctionnelle, un exemple de circuit mettant en oeuvre l'invention.

De mêmes éléments ont été désignés par de mêmes références aux différentes figures. Pour des raisons de clarté, seuls les étapes et éléments qui sont utiles à la compréhension de l'invention ont été représentés aux figures et seront décrits par la suite. En particulier, l'exécution proprement dite du programme par le circuit n'a pas été détaillée, la présente invention étant compatible avec tout programme classique exécuté par un circuit.

### Description détaillée

Une caractéristique de la présente invention est de conditionner un résultat de calcul fourni par un circuit électronique à l'exécution d'étapes d'accès en lecture ou en écriture à des éléments de mémorisation, de préférence volatile.

L'invention sera décrite en relation avec un exemple d'application à l'exécution d'un programme stocké dans une mémoire mais tout ce qui sera décrit s'applique également, sauf précision contraire, aux machines d'états qui utilisent également des éléments de mémorisation.

Des éléments de stockage temporaire sont prévus dans le circuit électronique pour stocker les états respectifs de bits dédiés à certains éléments de mémorisation. Ces bits sont par défaut dans un premier état (par exemple, 0) et sont basculés vers l'autre état (par exemple 1) quand le programme accède à l'élément de mémorisation correspondant. Par conséquent, si pour une raison quelconque (par exemple un saut dans le programme suite à une injection de faute) le programme n'accède pas à un élément surveillé, le bit correspondant n'est pas mis à jour. En fin de calcul, les bits du résultat calculé sont combinés avec les bits de surveillance pour conditionner le résultat fourni.

Selon un premier exemple, les bits de surveillance initialisé à 0 sont activés à l'état 1 quand l'élément de mémorisation correspondant a été lu et/ou écrit. Le résultat calculé est alors multiplié par un bit de contrôle obtenu par le produit de tous les bits de surveillance. Ainsi, si un des bits est resté à l'état 0, le résultat fourni est nul. Par conséquent, même si des tests de vérification d'intégrité sont sautés suite à des injections de faute, le résultat fourni ne pourra pas être exploité.

Selon un autre exemple, les bits de surveillance initialisé à 1 sont activés à l'état 0 quand l'élément de mémorisation correspondant a été lu et/ou écrit. Le résultat calculé est alors combiné par un OU par un bit de contrôle obtenu par la combinaison de tous les bits de vérification. Là encore, si un des bits est resté à l'état 1, le résultat fourni est nul.

La présente invention tire profit du fait que, même si un calcul est exécuté dans un ordre différent ou est désynchronisé, au moins certains des registres de stockage temporaire utilisés pour le calcul restent les mêmes d'une exécution à une autre.

Lors de l'écriture d'un programme à exécuter, les registres matériels ou les éléments de mémorisation (par exemple, des adresses de mots en mémoire vive) sont connus. Il est donc possible de fixer ceux des bits de surveillance à prendre en compte pour le résultat fourni à l'extérieur.

La figure 4 représente, de façon très schématique et par une vue à rapprocher de la figure 3, un mode de mise en oeuvre de la présente invention.

Comme précédemment, l'exécution d'un calcul s'effectue à partir d'une quantité numérique I pour obtenir un résultat R (sortie du bloc 20, OP). Toujours comme précédemment et bien que cela ne soit pas représenté en figure 4, une opération inverse est de préférence effectuée à partir du résultat R pour obtenir une quantité I' afin de vérifier l'intégrité du calcul. Puis, les quantités I et I' sont comparées (bloc 22, I=I' ?) pour vérifier que toute les étapes ont bien été exécutées.

Selon ce mode de mise en oeuvre de l'invention, en cas d'identité entre les valeurs I et I' (sortie Y du bloc 22), le résultat R est multiplié (bloc 36, B=ΠBi ; R=R*B) par le produit B des bits de vérification Bi et le résultat de cette multiplication est fourni en tant que résultat du calcul (bloc 23, OUTPUT R). Tous les bits Bi sont initialisés à 0 au début du calcul (bloc 33, B={0}). Chaque bit Bi est affecté à un registre REGi ou élément de mémorisation utilisé dans le calcul et est mis à l'état 1 (bloc 34, Bi=1) lorsque cet élément est lu ou écrit par le programme (bloc 35, ACCESS REGi).

Si toutes les étapes ont été effectuées correctement, le résultat fourni en sortie correspond au résultat R dans la mesure où tous les bits Bi sont à l'état 1. Par contre, si la moindre étape d'écriture ou de lecture d'un registre ne s'est pas produite, le résultat fourni en sortie sera nul dans la mesure où l'un de ces bits sera resté à l'état 0.

De plus, si suite à une perturbation introduite dans le calcul, un utilisateur mal intentionné cherche à éviter le test 22 (cas illustré par la figure 3) croyant empêcher le système de réagir, le résultat fourni en sortie sera inexploitable si des étapes du calcul n'ont pas été effectuées.

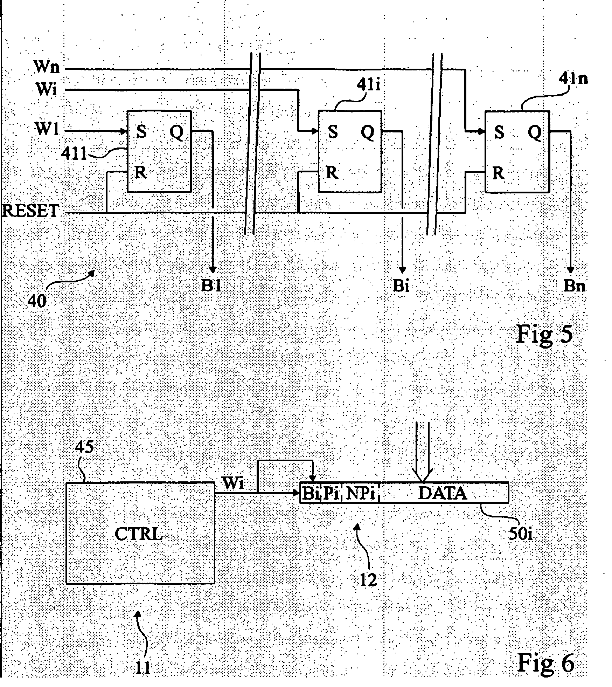

La figure 5 représente, de façon très schématique et sous forme de blocs, un exemple de circuit 40 pour la mise en oeuvre de l'invention.

Dans cet exemple, n bits B1,... Bi, ... Bn sont fournis par des bascules 411, 41i, 41n de type R-S dont les entrées respectives de mise à 1 (S) reçoivent les signaux d'écriture Wi (i compris entre 1 et n) dans les éléments de mémorisation associés et dont les sorties directes (Q) fournissent les bits Bi. En variante, l'entrée de mise à 1 est commandée non seulement par l'écriture mais également par la lecture du registre concerné, c'est-à-dire par tout accès à ce registre. Les entrées R de réinitialisation de toutes les bascules 41 sont reliées ensemble pour être réinitialisées à chaque début de calcul ou à chaque initialisation du circuit électronique exécutant le calcul.

L'activation des bits Bi est particulièrement simple car elle n'utilise aucun signal de commande spécifique. Il suffit que, de façon matérielle dans le circuit, les signaux de commande en lecture/écriture des registres à surveiller soient prélevés pour être reliés, si besoin par l'intermédiaire d'éléments d'adaptation de niveau, en entrées de mise à un des bascules.

La figure 6 représente, de façon schématique et partielle, un exemple de mise en oeuvre de la présente invention dans lequel chaque bit Bi de vérification d'un registre 50i de données correspond à l'ajout d'un bit dans ce registre mémoire. Dans l'exemple de la figure 6, les données DATA stockées dans le registre 50i sont complétées, outre par des bits Pi de parité et NPi de parité inverse, par le bit Bi de vérification. Ce bit est en entrée mis à jour par le signal Wi fourni par un circuit 45 de commande (CTRL) en lecture-écriture. Le circuit 45 fait par exemple partie de l'unité centrale 11 (figure 2) tandis que les registres 50 font par exemple partie de la mémoire 12.

Un avantage de la présente invention est que la contre-mesure réalisée est indépendante de l'ordre d'exécution des étapes du calcul.

Un autre avantage de la présente invention est que les bis de vérification étant prévus dans la structure matérielle du circuit, ils sont difficilement piratables. Il faudrait en effet pouvoir injecter une erreur matérielle pour forcer les différents bits à l'état actif.

Un autre avantage de la présente invention est que sa mise en oeuvre est aisée. En effet, lors de l'écriture du programme, il suffit de tenir compte des registres utilisés pour prendre en compte les bits de surveillance correspondants dans la formation du bit de contrôle B à multiplier par le résultat du calcul en sortie.

La sélection des registres à surveiller peut dépendre des étapes considérées comme sensibles du point de vue de la sécurité des données manipulées dans le programme à surveiller.

Un avantage induit de la présente invention est qu'elle est compatible avec des mises à jour des programmes dans les circuits électroniques, pourvu que le circuit matériel dans lequel ils sont exécutés dispose, pour chaque registre ou mot mémoire susceptible d'être mis à jour, d'un bit de vérification.

Bien entendu, la présente invention est susceptible de diverses variantes et modifications qui apparaîtront à l'homme de l'art. En particulier, la mise en oeuvre pratique de l'invention à partir des indications fonctionnelles données ci-dessus est à la portée de l'homme du métier en utilisant des outils en eux-mêmes connus.

## Revendications

1. Procédé de protection de l'exécution d'un calcul par un circuit électronique (10), conditionnant un résultat du calcul à des états de bits de vérification (Bi), dans lequel lesdits bits de vérifications sont initialisés à 0 avant chaque exécution du calcul, affectés à des éléments de mémorisation (REGi, 50i) et mis à 1 quand l'élément de mémorisation correspondant est accédé pendant l'exécution du calcul, indépendamment du contenu de cet élément de mémorisation,
**caractérisé en ce que:**
le résultat (R) à fournir est multiplié par le produit (B) des bits de vérification (Bi) avant fourniture par le circuit (10).

2. Procédé de protection de l'exécution d'un calcul par un circuit électronique (10), conditionnant un résultat du calcul à des états de bits de vérification (Bi), dans lequel lesdits bits de vérifications sont initialisés à 1 avant chaque exécution du calcul, affectés à des éléments de mémorisation (REGi, 50i) et mis à 0 quand l'élément de mémorisation correspondant est accédé pendant l'exécution du calcul, indépendamment du contenu de cet élément de mémorisation,
**caractérisé en ce que:**
chaque bit du résultat (R) à fournir est combiné par une combinaison de type OU avec un bit de contrôle (B), ledit bit de contrôle étant obtenu par une combinaison de type OU de tous les bits de vérification (Bi).

3. Procédé selon l'une quelconque des revendications 1 à 2,
dans lequel chaque élément de mémorisation temporaire du circuit électronique (10) comporte un desdits bits de vérification (Bi).

4. Procédé selon l'une quelconque des revendications 1 à 3,
dans lequel les bits de vérification (Bi) sont fonction des éléments de mémorisation (REGi, 50i) du circuit qui doivent être utilisés par le calcul.

5. Circuit électronique comportant une unité de traitement (11) pour exécuter au moins un calcul, et au moins un ensemble d'éléments de mémorisation temporaire (REGi, 50i), dans lequel un bit de vérification (Bi) est affecté à chaque élément, dans lequel lesdits bits de vérifications sont initialisés à 0 avant chaque exécution du calcul, affectés à des éléments de mémorisation (REGi, 50i) et mis à 1 quand l'élément de mémorisation correspondant est accédé pendant l'exécution du calcul, indépendamment du contenu de cet élément de mémorisation,
**caractérisé en ce que:**
le résultat (R) à fournir est multiplié par le produit (B) des bits de vérification (Bi) avant fourniture par le circuit (10).

6. Circuit électronique comportant une unité de traitement (11) pour exécuter au moins un calcul, et au moins un ensemble d'éléments de mémorisation temporaire (REGi, 50i), dans lequel un bit de vérification (Bi) est affecté à chaque élément, dans lequel lesdits bits de vérifications sont initialisés à 1 avant chaque exécution du calcul, affectés à des éléments de mémorisation (REGi, 50i) et mis à 0 quand l'élément de mémorisation correspondant est accédé pendant l'exécution du calcul, indépendamment du contenu de cet élément de mémorisation,
**caractérisé en ce que:**
chaque bit du résultat (R) à fournir est combiné par une combinaison de type OU avec un bit de contrôle (B), ledit bit de contrôle étant obtenu par une combinaison de type OU de tous les bits de vérification (Bi).

## Claims

1. A method for protecting the execution of a calculation by an electronic circuit (10), conditioning a result of the calculation to states of checking bits (Bi), wherein said checking bits are initialized to 0 before each execution of the calculation, assigned to storage elements (REGi, 50i) and set to 1 when the corresponding storage element is accessed during the execution of the calculation independently from the content of this storage element,
**characterized in that** the result (R) to be provided is multiplied by the product (B) of the checking bits (Bi) before provision by the circuit (10).

2. A method for protecting the execution of a calculation by an electronic circuit (10), conditioning a result of the calculation to states of checking bits (Bi), wherein said checking bits are initialized to 1 before each execution of the calculation, assigned to storage elements (REGi, 50i) and set to 0 when the corresponding storage element is accessed during the execution of the calculation independently from the content of this storage element,
**characterized in that** each bit of the result (R) to be provided is combined by an OR-type combination with a control bit (B), said control bit being obtained with an OR-type combination of all the checking bits (Bi).

3. The method of claim 1 or 2, wherein each temporary storage element of the electronic circuit (10) comprises one of said checking bits (Bi).

4. The method of any of claims 1 to 3, wherein the checking bits (Bi) are a function storage elements (REGi, 50i) of the circuit which must be used by the calculation.

5. An electronic circuit comprising a processing unit (11) for executing at least one calculation, and at least one set of temporary storage elements (REGi, 50i), wherein a checking bit (Bi) is assigned to each element, wherein said checking bits are set to 0 before each execution of the calculation, assigned to storage elements (REGi, 50i) and set to 1 when the corresponding storage element is accessed during the execution of the calculation, independently from the content of this storage element,
**characterized in that** the result (R) to be provided is multiplied by the product (B) of the checking bits (Bi) before provision by the circuit (10).

6. An electronic circuit comprising a processing unit (11) for executing at least one calculation, and at least one set of temporary storage elements (REGi, 50i), wherein a checking bit (Bi) is assigned to each element, wherein said checking bits are set to 1 before each execution of the calculation, assigned to storage elements (REGi, 50i) and set to 0 when the corresponding storage element is accessed during the execution of the calculation, independently from the content of this storage element,
**characterized in that** each bit of the result (R) to be provided is combined by an OR-type combination with a control bit (B), said control bit being obtained with an OR-type combination of all the checking bits (Bi).

## Patentansprüche

1. Ein Verfahren zum Schutz der Ausführung einer Berechnung eines elektronischen Schaltkreises (10), das ein Ergebnis der Berechnung in Zustände von Prüfbits (Bi) aufbereitet, wobei die Prüfbits vor jeder Ausführung der Berechnung auf 0 initialisiert werden, Speicherelementen (REGi, 50i) zugeordnet werden und unabhängig vom Inhalt des Speicherelements auf 1 gesetzt werden, wenn auf das entsprechende Speicherelement während der Ausführung der Berechnung zugegriffen wird, **dadurch gekennzeichnet, dass**
das zu liefernde Ergebnis (R) vor der Bereitstellung durch den Schaltkreis (10) mit dem Produkt (B) der Prüfbits (Bi) multipliziert wird.

2. Ein Verfahren zum Schutz der Ausführung einer Berechnung eines elektronischen Schaltkreises (10), der ein Ergebnis der Berechnung in Zustände von Prüfbits (Bi) aufbereitet, wobei die Prüfbits vor jeder Ausführung der Berechnung auf 1 initialisiert werden, Speicherelementen (REGi, 50i) zugeordnet werden und unabhängig vom Inhalt des Speicherelements auf 0 gesetzt werden, wenn auf das entsprechende Speicherelement während der Ausführung der Berechnung zugegriffen wird, **dadurch gekennzeichnet, dass**
jedes zu liefernde Bit des Ergebnisses (R) über eine Oder-Verknüpfung mit einem Kontrollbit (B) verknüpft ist, wobei das Kontrollbit (B) über eine Oder-Verknüpfung aller Prüfbits (Bi) erhalten wird.

3. Verfahren nach Anspruch 1 oder 2, wobei jedes temporäre Speicher Element des elektronischen Schaltkreises (10) eines dieser Prüfbits (Bi) aufweist.

4. Verfahren nach einem der Ansprüche 1 bis 3, wobei die Prüfbits (Bi) eine Funktion der Speicherelemente (REGi, 50i) des Schaltkreises sind, die bei der Berechnung benützt werden müssen.

5. Ein elektronischer Schaltkreis, der folgendes aufweist, eine Verarbeitungseinheit (11) zum Ausführen wenigstens einer Berechnung, und wenigstens einen Satz temporärer Speicherelemente (REGi, 50i), wobei ein Prüfbit (Bi) jedem Element zugeordnet ist, wobei die Prüfbits (Bi) vor jeder Ausführung der Berechnung auf 0 gesetzt werden, Speicherelementen (REGi, 50i) zugeordnet werden und unabhängig vom Inhalt des Speicher Elements auf 1 gesetzt werden, wenn auf das entsprechende Speicherelement während der Ausführung der Berechnung zugegriffen wird, **dadurch gekennzeichnet, dass**
das zu liefernde Ergebnis (R) vor der Bereitstellung durch den Schaltkreis (10) mit dem Produkt (B) der Prüfbits (Bi) multipliziert wird.

6. Ein elektronischer Schaltkreis, der folgendes aufweist, eine Verarbeitungseinheit (11) zum Ausführen wenigstens einer Berechnung, und wenigstens einen Satz temporärer Speicherelemente (REGi, 50i), wobei ein Prüfbit (Bi) jedem Element zugeordnet ist, wobei die Prüfbits (Bi) vor jeder Ausführung der Berechnung auf 1 gesetzt werden, Speicherelementen (REGi, 50i) zugeordnet werden und unabhängig vom Inhalt des Speicherelements auf 0 gesetzt werden, wenn auf das entsprechende Speicherelement während der Ausführung der Berechnung zugegriffen wird, **dadurch gekennzeichnet, dass**
jedes zu liefernde Bit des Ergebnisses (R) über eine Oder-Verknüpfung mit einem Kontrollbit (B) verknüpft ist, wobei das Kontrollbit (B) über eine Oder-Verknüpfung aller Prüfbits (Bi) erhalten wird.
